# EUROPEAN PATENT SPECIFICATION

(11) **EP 2 482 405 B1**
(45) Date of publication and mention of the grant of the patent: **30.10.2013**
(21) Application number: 12153109.9
(22) Date of filing: 30.01.2012
(51) Int. Cl.: H02G 3/08, H02G 3/12

(54) **Electrical installation box**
Elektroinstallationskasten
Boîte d'installation électrique

(30) Priority: 31.01.2011 NL 2006105
(43) Date of publication of application: 01.08.2012
(73) Proprietor: Attema B.V., 4203 NJ Gorinchem (NL)
(72) Inventor: Goth, Robin, 6862 GT Oosterbeek (NL)
(74) Representative: Mertens, Hans Victor

(56) References cited:
- EP-A1- 1 467 454
- EP-A1- 1 895 632
- DE-C- 339 265
- DE-C1- 19 952 643
- NL-C2- 1 019 822

## Description

### FIELD OF THE INVENTION

The invention relates to the field of electrical installation material, and more specifically to an installation box for mounting in a wall, in particular in a hole in a hollow wall. The invention more specifically relates to an installation box and corresponding sprout part.

Herein, an installation box is deemed equivalent to an electrical installation box, a junction box, and an electrical junction box. The installation box may be used for housing installation material in general, (junctions between) electrical conductors, electrical signal wires, optical cables or fibers, and may further accommodate switching material, one or more electrical or optical sockets, signaling material, telecommunication material, building automation material, controller or computer material, and the like.

### BACKGROUND OF THE INVENTION

Installation boxes for mounting in a hollow wall are known in the art, e.g. from EP1895632. This reference discloses an installation box, suitable for fitting in a hole in a hollow wall. The installation box comprises a bottom and a wall, which define a space suitable for allowing material of an electrical installation to be fitted therein. The bottom comprises first and second bottom portions and the wall comprises first and second wall portions. A nozzle extends from an outer side of the second wall portion, which nozzle is suitable for allowing a tube of the electrical installation to be inserted therein. The first and second wall portions, at a distance from the bottom, are integrated via a hinged portion having an axis parallel to the bottom, so that the second bottom portion and the second wall portion with the nozzle form a nozzle part which is pivotable relative to the rest of the box.

In mounting an installation box of a type disclosed in reference EP1895632, a problem arises when a part of the back support frame supporting the front wall board of the hollow wall lies close to, adjacent, or even across or partly across the (envisaged) wall opening for mounting the installation box, in particular such that the passage in the side wall of the installation box for placing the sprout part is effectively blocked by said part of the frame, or such that a tube running from a sprout of the sprout part cannot lie against the back side of the front wall board of the hollow wall. This would make a proper placement of the sprout part in the passage of the installation box, and consequently use of such an installation box, impossible.

### SUMMARY OF THE INVENTION

It would be desirable to provide an installation box for a hollow wall with a sprout part which can be mounted in the installation box, not only when any back support frame part supporting a front wall board of a hollow wall is remote from the wall opening for the installation box such that the sprout of the sprout part and a corresponding tube can be placed directly behind the front wall board, but also when a back support frame part supporting the front wall board lies close to, or adjacent to the wall opening, or even at least partly overlaps the area where a wall opening is envisaged.

To better address at least one of these concerns, in an aspect of the invention a combination of installation box and sprout part is provided. The installation box comprises a bottom wall and a side wall connected to the bottom wall, the side wall comprising an edge defining an installation box opening. The bottom wall comprises a bottom wall opening, and the side wall comprises a side wall opening, the side wall opening and the bottom wall opening connecting to one another. The sprout part comprises a bottom wall section conforming to the bottom wall opening of the installation box, and a side wall section having at least one sprout extending at right angles to the side wall section from a sprout opening in the side wall section, wherein the side wall section conforms to the side wall opening of the installation box. The installation box and the sprout part are adapted for the sprout part to take at least a first position or a second position relative to the installation box. In the first position of the sprout part, the sprout opening thereof is above the bottom wall of the installation box. In the second position of the sprout part, the sprout opening thereof is at least partly below the bottom wall of the installation box.

In the combination of an installation box and sprout part according to the present invention, the sprout part is displaceable in a direction at right angles to the bottom wall of the installation box (in a direction substantially parallel to the side wall of the installation box) substantially without changing the orientation of the sprout part. Accordingly, assuming that the sprout of the sprout part extends in a direction substantially parallel to the bottom wall of the installation box when the installation box is mounted in a hollow wall, the sprout may be displaced to lie against a back side of a back support frame part, at a distance from the front wall board in the hollow wall. Thus, the installation box may be mounted in the hollow wall at an arbitrary location without concern whether or not an internal back support frame part would be located at, or in the direct vicinity of the envisaged location. In any case, a sprout part can be coupled to the installation box, and to a tube running at the back side of the back support frame part. This greatly facilitates the flexibility in constructing the hollow wall, and in mounting the installation box, since one of these activities virtually does not interfere with the other: in the construction of the hollow wall, no account need to be taken from any future location of an installation box in the hollow wall, while during mounting of the installation box, no account, or hardly any account, need to be taken from the location of back support frame parts. The installation box can be mounted even if a back support frame part (having a thickness up to a predetermined size) appears to be present at or near the wall opening in the hollow wall.

In an embodiment of the combination of the present invention, in the first position of the sprout part, the bottom wall section of the sprout part is parallel to the bottom wall of the installation box closing the bottom wall opening thereof, and the side wall section of the sprout part is parallel to the side wall of the installation box closing the side wall opening thereof. In the second position of the sprout part, the bottom wall section of the sprout part is situated at least partly below the bottom wall of the installation box at the bottom wall opening thereof, and the side wall section of the sprout part is parallel to the side wall of the installation box closing the side wall opening thereof.

Thus, with a side wall section of the sprout part which covers the side wall opening of the installation box both in the first position and the second position of the sprout part, an electrical safety or a sealing of the installation of which the installation box and sprout part may form part, can be guaranteed. The side wall section should have a height (i.e. a dimension at right angles to the bottom wall section of the sprout part) to overlap the side wall opening of the installation box both in the first position and in the second position of the sprout part.

With the bottom wall section of the sprout part located at least partly below the bottom wall of the installation box, when the sprout part is in its second position, a gap will exist between the bottom wall section and the bottom wall of the installation box. To fulfill the requirements with regard to electrical safety or sealing of the installation of which the installation box and sprout part form part, such a gap must be closed. This may be done by a separate gap closing part designed for the purpose, or may be implemented in the design of the installation box and/or sprout part, as elucidated below.

In an embodiment of the combination of the present invention, in the second position of the sprout part, the bottom wall section thereof extends at an angle greater than zero from the bottom wall of the installation box. One of the edges of the bottom wall section of the sprout part, in particular the edge facing away from the side wall section of the sprout part, may be located at or near the bottom wall of the installation box, or may be connected to it by a flexible connection, such as a hingable connection, whereas an edge of the bottom wall section adjoining the side wall section is situated at a distance from the bottom wall of the installation box. Any gap between edges of the bottom wall section of the sprout part, and the bottom wall of the installation box, in such second position of the sprout part, may be closed by a separate gap closing part designed for the purpose, or may be implemented in the design of the installation box and/or sprout part, as elucidated below.

In an embodiment of the combination of the present invention, the installation box bottom wall opening at at least part of its edge is provided with a flap which, in the second position of the sprout part, extends to the bottom wall section of the sprout part, or adjoins the bottom wall section of the sprout part. In a further embodiment, the flap is deflectably, in particular hingedly connected to the installation box bottom wall. Accordingly, the bottom wall section of the sprout part may be placed in the one or more flaps in the bottom wall opening of the installation box, and the sprout part may be pressed into the bottom wall opening, whereby the one or more flaps of this bottom wall opening are deflected to close any gap between the bottom wall section of the sprout part, and the bottom wall of the installation box. The shape of a flap may be selected in conformity with the gap to be closed. The flap size may be about equal to the gap, or may be bigger than the gap. In both situations, the gap may be effectively covered to guarantee the electrical safety or sealing of the installation box.

In an embodiment of the combination of the present invention, the bottom wall section and/or the side wall section of the sprout part is/are provided with a flap which, in the second position of the sprout part, extends to the bottom wall of the installation box. In particular the flap may be securely connected to the sprout part. Accordingly, the installation box may simply be provided with a hole, and any gap between the bottom wall section of the sprout part in the second position thereof, and the bottom wall of the installation box, may be closed by the sprout part flap or flaps having a shape adapted to close or cover the gap.

In an embodiment of the combination of the present invention, the bottom wall of the installation box comprises a stop projecting upwardly for locking the bottom wall section of the sprout part in its first or second position relative to the bottom wall. Thus, a snap connection or other kind of connection may be provided to simply hold the sprout part into its intended use position.

In an aspect of the present invention, an installation box or sprout part is provided, which is intended to be used in a combination of the present invention.

These and other aspects of the invention will be more readily appreciated as the same becomes better understood by reference to the following detailed description and considered in connection with the accompanying drawings in which like reference symbols designate like parts.

### BRIEF DESCRIPTION OF THE DRAWINGS

Figure 1 depicts a perspective view of an embodiment of an installation box according to the present invention, showing an upper part thereof.
Figure 2 depicts another perspective view of the installation box of Figure 1, showing a bottom side thereof.
Figure 3 depicts a further perspective view of the installation box of Figure 2, as seen from a slightly different angle when compared to Figure 2, in use condition.
Figures 4a and 4b depict different perspective views of an embodiment of a sprout part associated with an installation box according to the present invention.
Figures 5a and 5b depict different perspective views of another embodiment of a sprout part associated with an installation box according to the present invention.
Figure 6 depicts a perspective view of a rear side of a wall part having the installation box of any of Figures 1-3, in use condition, mounted in an opening in a hollow wall, the installation box being combined with the sprout part of Figures 4a, 4b.
Figure 7 depicts a transverse cross-section of the structure shown in Figure 6, taken in a vertical plane at right angles to the wall part in the centre of the installation box.

### DETAILED DESCRIPTION OF EMBODIMENTS

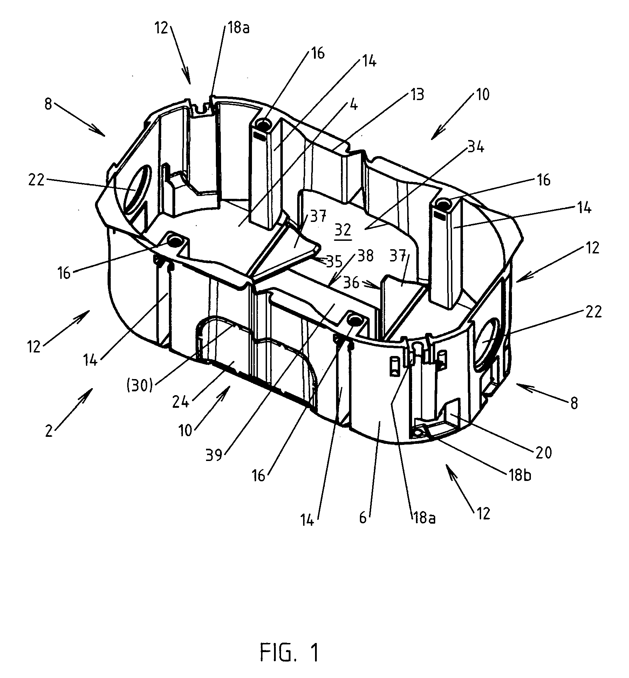

Figures 1-3 depict an installation box 2 having a bottom wall 4 and a side wall 6. The side wall 6 has two opposite short side wall sections 8 and two opposite long side wall sections 10 connected by rounded corner side wall sections 12. The side wall 6 has an edge 13 facing away from the bottom wall 4, the edge defining an installation box opening. The installation box 2 defines a space in which electrical installation material, such as a socket structure, a switching structure, or other installation material, can be mounted, and in which connections between conductors can be made. The installation box 2 is configured to be mounted in an elongated hole in a hollow wall, such as a wall made of a frame of wooden beams or metal profiled sections, covered by front wall boards containing wood or gypsum (plasterboard, gypsumboard). When mounted in a hollow wall, the edge of the side wall 6 of the installation box 2 in substantially aligned with the front side of the wall, whereas the remaining structure of the installation box 2 is situated in the wall, partly in a board, and partly behind the board of the wall. The installation box 2 has ribs 14 extending along the long side wall sections 10 in a direction from the bottom wall 4 to the edge 13, and provided with threaded holes 16 for inserting screws (not shown) for mounting installation material, a cover, etc.. Further, the installation box 2 is provided with support structures 18a, 18b for supporting a shaft (not shown) carrying a radially extending arm (not shown) which can be rotated from a rest position in a recess 20 to an active position out of the recess 20 by rotating the shaft, such that the arm will form a hook member to abut a back side of a wall board, to prevent the installation box 2 to be pulled out of the (hole in the) wall in which it is mounted.

The installation box 2 is intended to be connected to one or more flexible, semi-rigid or rigid tubes mounted in the wall. For this purpose, at the short side wall sections 8, holes 22 are provided, where a sprout part (not shown) having a side wall section comprising a tubular section adjoining the hole 22 can be mounted by a sliding action.

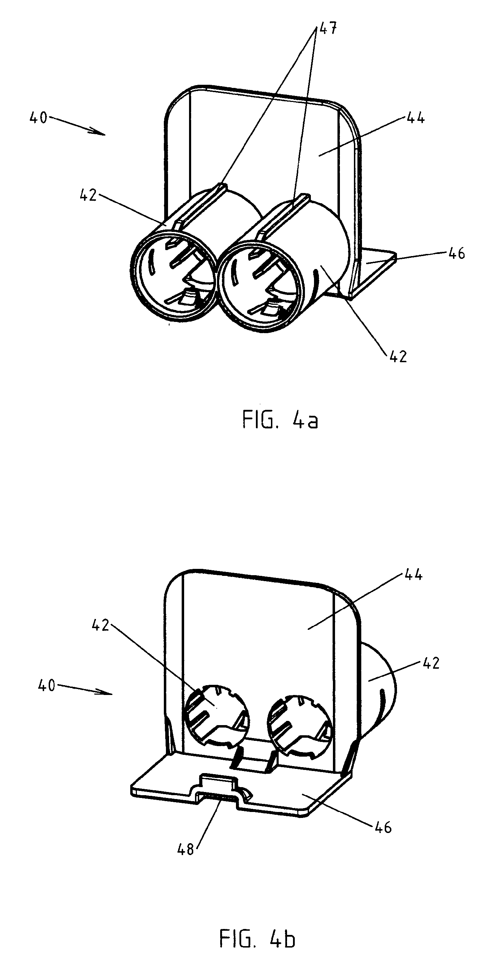

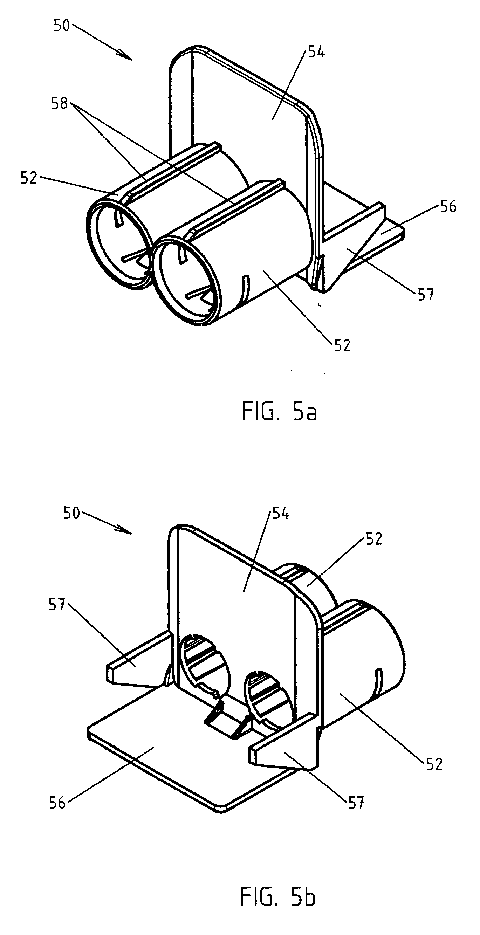

In a part of one of the long side wall sections 10 of the side wall 6, and in an adjacent part of the bottom wall 4, a wall part 24 is provided which is connected to the remainder of the walls 4, 6 by a weakened edge connection such that the wall part 24 can be removed easily and in a predefined way, to provide an opening 30 for placing a sprout part such as the one shown in Figures 4a, 4b, or the one shown in Figures 5a, 5b, to be discussed below.

A part of the opposite long side wall section 10 of the side wall 6, and an adjacent part of the bottom wall 4 define an opening 32 for placing a sprout part such as the one shown in Figures 4a, 4b, or the one shown in Figures 5a, 5b to be discussed below.

Figures 4a and 4b depict a sprout part 40 configured to be used in the installation box 2. The sprout part 40 comprises two tubular sprouts 42 mounted on a sprout side wall section 44, where openings in the sprout side wall section 44 lead to the sprouts 42. A sprout bottom wall section 46 is connected to the sprout side wall section 44 along an edge portion thereof, and extends at right angles to the sprout side wall section 44. As shown in Figure 4a, each of the sprouts 40 is provided with a rib 47. As shown in Figure 4b, the sprout bottom wall section 46 has a recess 48 at an edge of the sprout bottom wall section 46 facing away from the sprout side wall section 44.

Figures 5a and 5b depict a sprout part 50 configured to be used in the installation box 2. The sprout part 50 comprises two tubular sprouts 52 mounted on a sprout side wall section 54, where openings in the sprout side wall section 54 lead to the sprouts 52. A sprout bottom wall section 56 is connected to the sprout side wall section 54 along an edge portion thereof, and extends at right angles to the sprout side wall section 54. Substantially triangular sprout flap wall sections 57 extend from opposing edges of the sprout side wall section 54, at right angles both to the sprout side wall section 54 and the sprout bottom wall section 56. As shown in Figure 5a, each of the sprouts 40 is provided with a rib 58.

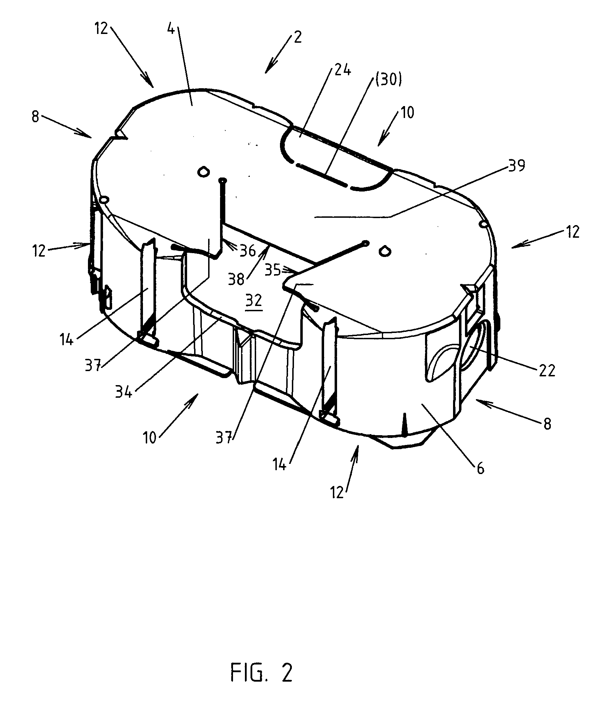

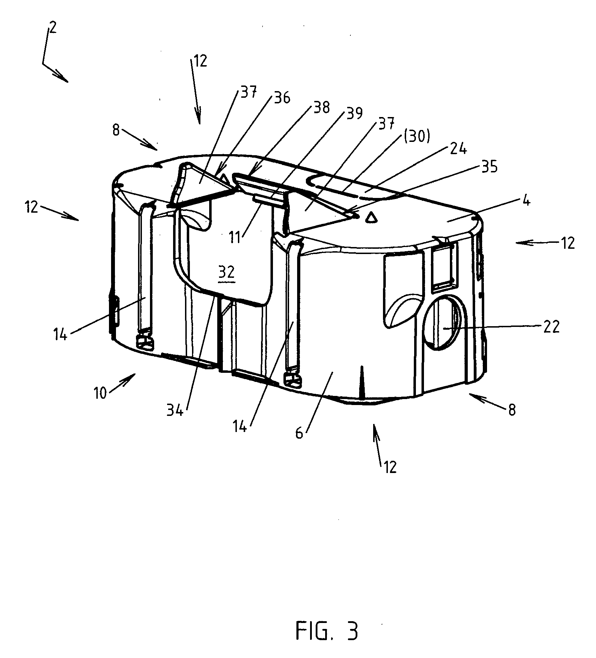

Turning back to Figures 1-3, it is seen that the bottom wall 4 of the installation box 2 comprises an opening 32 partly in a long side wall section 10 opposite the long wall section 10 containing the wall part 24, and partly in the bottom wall 4. After manufacture of the installation box 2, and before use thereof, the edges of the opening 32 are defined by edge 34 of an elongated cut-out in the long side wall section 10, edges 35, 36 of two opposite bottom wall side flap sections 37, and an edge 38 of a bottom wall back flap section 39. As illustrated in Figure 3, the bottom wall side flap sections 37 and the bottom wall back flap section 39 each can be bent or rotated or hinged from a manufacturing position in which it is in the same plane as the (remainder of the) bottom wall 4 (see Figures 1 and 2), to a use position in which it extends at an angle greater than zero degrees to the (remainder of the) bottom wall 4 of the installation box 2 (see Figure 3). Accordingly, the area of the part of the opening 32 in the bottom wall 4 is in fact determined without taking into account any area of the bottom wall side flap sections 37 and the bottom wall back flap section 39.

When mounting the sprout part 40 or 50 in the opening 30 (to be made) of the installation box 2 as depicted in Figures 1 and 2, first the wall part 24 is removed from the installation box 2. When mounting the sprout part 40 or 50 in the opening 30 or 32 of the installation box 2, the sprout part 40 or 50 is inserted from the interior of the installation box 2 by bringing the sprouts 42 or 52, respectively, through the part of the opening 30 or 32 in the corresponding long side wall section 10 until the sprout side wall section 44 or 54, respectively, abuts the inner surface of the long side wall section 10, and the sprout bottom wall section 46 or 56, respectively, abuts the inner surface of the bottom wall 4, in a mounted position of the sprout part 40 or 50, respectively. Here, "inner" refers to a surface facing the interior of the installation box 2. In the mounted position of the sprout part 40 or 50 in the installation box 2, the ribs 47 or 58, respectively, of the sprouts 42 or 52, respectively, contact the corresponding, adjacent edge of the part of the opening 30 or 32 in the long side wall section 10. In the recess 48, a projection 11 (see Figure 3) projecting from the bottom wall 4 of the installation box 2 snaps to removably lock the sprout part 40 in its mounted position. The same or a similar projection 11 will lock the sprout part 50 in its mounted position by providing a stop for the sprout bottom wall section 56 to prevent the sprout part 50 to move away from the adjacent long side wall section 10. The openings in the sprout side wall sections 44 or 54, respectively, are above the bottom wall 4 of the installation box 2, i.e. they are at a side of the bottom wall 4 facing the edge 13 in a first position of the sprout part 40 or 50.

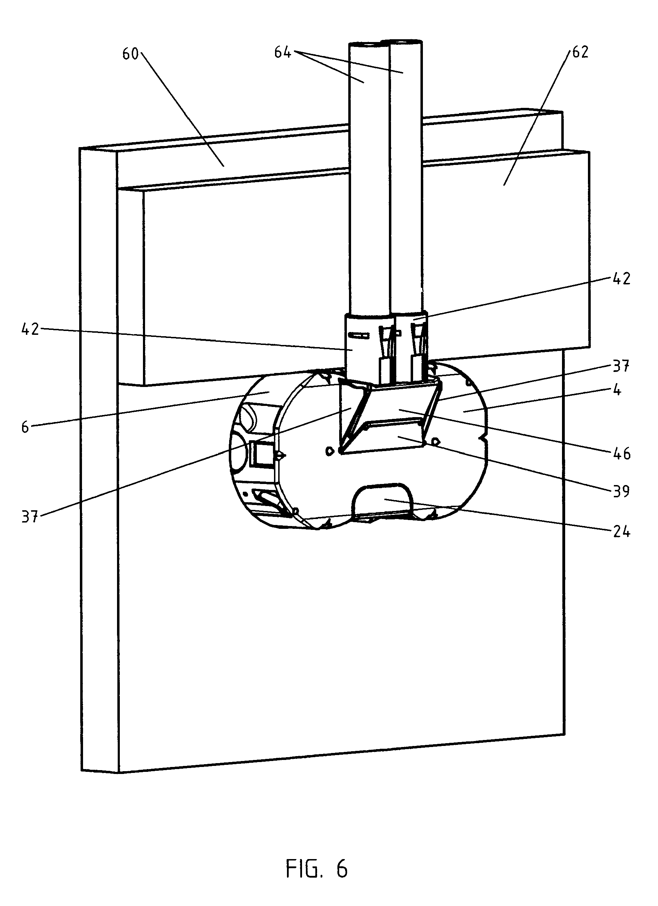

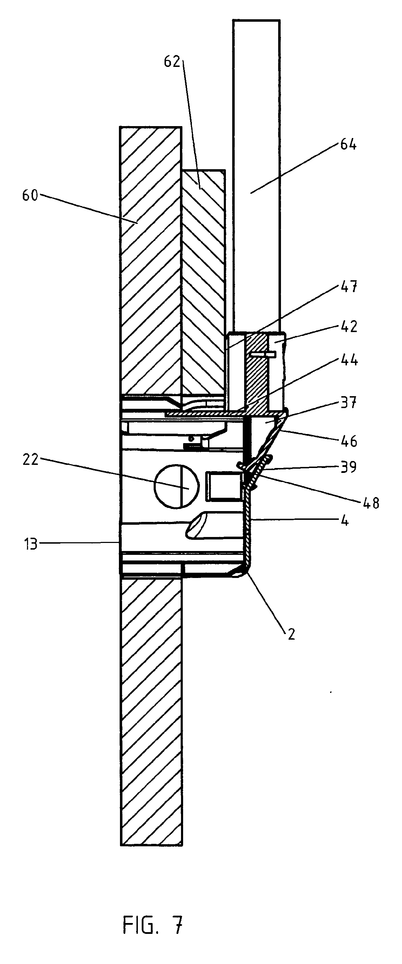

The sprout part 40 or 50 can take a second position in opening 32 of the installation box 2, as illustrated with reference to Figures 6 and 7, in which second position the openings in the sprout side wall sections 44 or 54, respectively, are below the bottom wall 4 of the installation box 2, i.e. they are at a side of the bottom wall 4 facing away from the edge 13.

Figures 6 and 7 depict the installation box 2 of Figures 1-3 when mounted in a board 60 of a hollow wall, where part of the side wall 6 and the bottom wall 4 of the installation box 2 are visible. The board 60 is shown from its back side, i.e. the side facing away from a room having the hollow wall.

At the back side of the board 60, a reinforcing or support beam 62 is provided. When the sprout part 40 of 50 would need to be mounted in the opening 32 of the installation box 2, as described above in general, the support beam 62 would at least partly block the opening 32. However, as is shown in Figures 6 and 7 for the sprout part 40 (although the same or similar observations apply to the sprout part 50), the bottom wall side flap sections 37 and the bottom wall back flap section 39 of the opening 32 may be moved by the sprout part 40, in particular by the sprout bottom wall section 46, such that the sprouts 42 may project from the installation box 2 behind the support beam 62, to be coupled to rigid, semi-rigid, or flexible tubes 64. In case of the sprout part 40 in the opening 32, the bottom wall side flap sections 37 cover any opening which would be present if the bottom wall side flap sections 37 would be absent. In case of the sprout part 50 in the opening 32, the substantially triangular bottom wall side flap sections 37 could be omitted from the installation box 2, where the substantially triangular sprout flap wall sections 57 would take over its function of closing openings which would otherwise be present if both the bottom wall side flap sections 37 and the sprout flap wall sections 57 would be absent.

As is further seen in Figures 6 and 7, the sprout bottom wall section 46 (or, if sprout part 50 would be used, 56) is bent towards the sprout side wall section 44 (or, if sprout part 50 would be used, 54) by the bottom wall back flap section 39.

Accordingly, the second position of the sprout part 40 or 50 as shown in Figures 6 and 7 allows for the installation box 2 to be mounted in the vicinity of a support beam 62 behind a board 60 of a hollow wall, without impairing its functions. A coupling between a tube 64 and the sprout part 40 or 50 can be made without undue effort.

As is seen in Figures 1-3, the installation box 2 in fact comprises two basically partly circular shaped spaces integrated to form a substantially oval-shaped interior space. For this reason, the installation box 2 may also be referred to as a double box.

As explained above, an installation box comprises a bottom wall and a side wall. The bottom wall comprises a bottom wall opening connecting to a side wall opening of the side wall. A sprout part comprises a bottom wall section conforming to the bottom wall opening of the installation box, and a side wall section conforming to the side wall opening of the installation box, and having at least one sprout extending at right angles to the side wall section from a sprout opening in the side wall section. In a first position of the sprout part, the sprout opening thereof is above the bottom wall of the installation box. In the second position of the sprout part, the sprout opening thereof is at least partly below the bottom wall of the installation box.

As required, detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. Further, the terms and phrases used herein are not intended to be limiting, but rather, to provide an understandable description of the invention.

The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language, not excluding other elements or steps). Any reference signs in the claims should not be construed as limiting the scope of the claims or the invention.

The mere fact that certain measures are recited in mutually different dependent claims does not indicate that a combination of these measures cannot be used to advantage.

The term coupled, as used herein, is defined as connected, although not necessarily directly.

## Claims

1. Combination of installation box (2) and sprout part (40; 50),
the installation box (2) comprising:
a bottom wall (4); and
a side wall (6) connected to the bottom wall (4), the side wall (6) comprising an edge defining an installation box opening,
wherein the bottom wall (4) comprises a bottom wall opening, and the side wall (6) comprises a side wall opening, the side wall opening and the bottom wall opening connecting to one another,
the sprout part (40; 50) comprising:
a bottom wall section (46; 56) conforming to the bottom wall opening of the installation box (2); and
a side wall section (44; 54) having at least one sprout (42; 52) extending at right angles to the side wall section (44; 54) from a sprout opening in the side wall section (44; 54), wherein the side wall section (44; 54) conforms to the side wall opening of the installation box (2),
wherein the installation box (2) and the sprout part (40; 50) are adapted for the sprout part (40; 50) to take at least a first position or a second position relative to the installation box, wherein
in the first position of the sprout part (40; 50), the sprout opening thereof is above the bottom wall (4) of the installation box (2)
**characterized in that**, in the second position of the sprout part (40; 50), the sprout opening thereof is at least partly below the bottom wall of the installation box.

2. Combination of installation box (2) and sprout part (40; 50) according to claim 1, wherein
in the first position of the sprout part (40; 50), the bottom wall section (46; 56) of the sprout part (40; 50) is parallel to the bottom wall (4) of the installation box (2) closing the bottom wall opening thereof, and the side wall section (44; 54) of the sprout part (40; 50) is parallel to the side wall (6) of the installation box (2) closing the side wall opening thereof; and
in the second position of the sprout part (40; 50), the bottom wall section (46; 56) of the sprout part (40; 50) is situated at least partly below the bottom wall (4) of the installation box (2) at the bottom wall opening thereof, and the side wall section (44; 54) of the sprout part (40; 50) is parallel to the side wall (6) of the installation box closing the side wall opening thereof.

3. Combination of installation box (2) and sprout part (40; 50) according to claim 1 or 2, wherein, in the second position of the sprout part (40; 50), the bottom wall section (46; 56) thereof extends at an angle greater than zero from the bottom wall (4) of the installation box (2).

4. Combination of installation box (2) and sprout part (40; 50) according to any of the preceding claims, wherein the installation box bottom wall opening at at least part of its edge is provided with a flap (37, 39) which, in the second position of the sprout part (40; 50), extends to the bottom wall section (46; 56) of the sprout part (40; 50), or adjoins the bottom wall section (46; 56) of the sprout part (40; 50).

5. Combination of installation box (2) and sprout part (40; 50) according to claim 4, wherein the flap (37, 39) is deflectably, in particular hingedly connected to the installation box bottom wall (4).

6. Combination of installation box (2) and sprout part (40; 50) according to any of claims 1-3, wherein the bottom wall section and/or the side wall section (54) of the sprout part (50) is/are provided with a flap (57) which, in the second position of the sprout part (50), extends to the bottom wall (4) of the installation box (2).

7. Combination of installation box (2) and sprout part (40; 50) according to claim 6, wherein the flap (57) is securely connected to the sprout part (50).

8. Combination of installation box (2) and sprout part (40; 50) according to any of the preceding claims, wherein the bottom wall (4) of the installation box (2) comprises a stop (11) projecting upwardly for locking the bottom wall section of the sprout part in its first or second position relative to the bottom wall (4).

9. Installation box (2) intended to be used in a combination of the installation box (2) and sprout part (40; 50) according to any of the preceding claims, the installation box (2) comprising:
a bottom wall (4); and
a side wall (6) connected to the bottom wall (4), the side wall (6) comprising an edge defining an installation box opening,
wherein the bottom wall (4) comprises a bottom wall opening, and the side wall (6) comprises a side wall opening, the side wall opening and the bottom wall opening connecting to one another.

10. Sprout part (40; 50) intended to be used in a combination of installation box (2) and the sprout part (40; 50) according to any of claims 1-9, the sprout part (40; 50) comprising:
a bottom wall section (46; 56) conforming to a bottom wall opening of the installation box (2); and
a side wall section (44; 54) having at least one sprout (42; 52) extending at right angles to the side wall section (44; 54) from a sprout opening in the side wall section (44; 54),
wherein the side wall section (44; 54) conforms to a side wall opening of the installation box (2).

## Patentansprüche

1. Kombination aus einer Installationsdose (2) und einem Auslassteil (40; 50),
wobei die Installationsdose (2) umfasst:
eine Bodenwand (4); und
eine Seitenwand (6), die mit der Bodenwand (4) verbunden ist, wobei die Seitenwand (6) eine Kante umfasst, die eine Installationsdosenöffnung definiert,
wobei die Bodenwand (4) eine Bodenwandöffnung umfasst, und die Seitenwand (6) eine Seitenwandöffnung umfasst, wobei die Seitenwandöffnung und die Bodenwandöffnung zueinander in Verbindung stehen,
wobei das Auslassteil (40; 50) umfasst:
einen Bodenwandabschnitt (46; 56), der mit der Bodenwandöffnung der Installationsdose (2) übereinstimmt; und
einen Seitenwandabschnitt (44; 54), der mindestens einen Auslass (42; 52) hat, der sich unter rechten Winkeln in Bezug auf den Seitenwandabschnitt (44; 54) von einer Auslassöffnung in dem Seitenwandabschnitt (44; 54) erstreckt, wobei der Seitenwandabschnitt (44; 54) mit der Seitenwandöffnung der Installationsdose (2) übereinstimmt,
wobei die Installationsdose (2) und das Auslassteil (40; 50) eingerichtet sind, sodass das Auslassteil (40; 50) zumindest eine erste Position oder eine zweite Position relativ zu der Installationsdose einnimmt, wobei
in der ersten Position des Auslassteils (40; 50) dessen Auslassöffnung oberhalb der Bodenwand (4) der Installationsdose (2) ist
**dadurch gekennzeichnet, dass** in der zweiten Position des Auslassteils (40; 50) dessen Auslassöffnung zumindest teilweise unterhalb der Bodenwand der Installationsdose ist.

2. Kombination aus einer Installationsdose (2) und einem Auslassteil (40; 50) gemäß Anspruch 1, wobei
in der ersten Position des Auslassteils (40; 50) der Bodenwandabschnitt (46; 56) des Auslassteils (40; 50) parallel zu der Bodenwand (4) der Installationsdose (2) ist, wodurch dessen Bodenwandöffnung geschlossen wird, und der Seitenwandabschnitt (44; 54) des Auslassteils (40; 50) parallel zu der Seitenwand der Installationsdose (2) ist, wodurch dessen Seitenwandöffnung geschlossen wird; und
in der zweiten Position des Auslassteils (40; 50) sich der Bodenwandabschnitt (46; 56) des Auslassteils (40; 50) zumindest teilweise unterhalb der Bodenwand (4) der Installationsdose (2) an dessen Bodenwandöffnung befindet und der Seitenwandabschnitt (44; 54) des Auslassteils (40; 50) parallel zu der Seitenwand (6) der Installationsdose ist, wodurch dessen Seitenwandöffnung geschlossen ist.

3. Kombination aus einer Installationsdose (2) und einem Auslassteil (40; 50) gemäß Anspruch 1 oder 2, wobei sich in der zweiten Position des Auslassteils (40; 50) dessen Bodenwandabschnitt (46; 56) unter einem Winkel von größer als Null von der Bodenwand (4) der Installationsdose (2) erstreckt.

4. Kombination aus einer Installationsdose (2) und einem Auslassteil (40; 50) gemäß einem der vorhergehenden Ansprüche, wobei die Installationsdosenbodenwandöffnung zumindest an einem Teil ihrer Kante mit einer Klappe (37, 39) bereitgestellt ist, die sich in der zweiten Position des Auslassteils (40; 50) zu dem Bodenwandabschnitt (46; 56) des Auslassteils (40; 50) erstreckt oder an den Bodenwandabschnitt (46; 56) des Auslassteils (40; 50) angrenzt.

5. Kombination aus einer Installationsdose (2) und einem Auslassteil (40; 50) gemäß Anspruch 4, wobei die Klappe (37, 39) auslenkbar, insbesondere klappbar mit der Installationsdosenbodenwand (4) verbunden ist.

6. Kombination aus einer Installationsdose (2) und einem Auslassteil (40; 50) gemäß einem oder mehreren der Ansprüche 1-3, wobei der Bodenwandabschnitt und/oder der Seitenwandabschnitt (54) des Auslassteils mit eine Klappe (57) bereitgestellt ist/bereitgestellt sind, die sich in der zweiten Position des Auslassteils (50) zu der Bodenwand (4) der Installationsdose (2) erstreckt.

7. Kombination aus einer Installationsdose (2) und einem Auslassteil (40; 50) gemäß Anspruch 6, wobei die Klappe (57) fest mit dem Auslassteil (50) verbunden ist.

8. Kombination aus einer Installationsdose (2) und einem Auslassteil (40; 50) gemäß einem oder mehreren der vorhergehenden Ansprüche, wobei die Bodenwand (4) der Installationsdose (2) einen Anschlag (11) umfasst, der zum Verriegeln des Bodenwandabschnitts des Auslassteils in seiner ersten oder zweiten Position in Bezug auf die Bodenwand (4) nach oben hervorsteht.

9. Installationsdose (2), die in einer Kombination der Installationsdose (2) und des Auslassteils (40; 50) gemäß einem oder mehreren der vorhergehenden Ansprüche verwendet werden soll, wobei die Installationsdose (2) umfasst:
eine Bodenwand (4); und
eine Seitenwand (6), die mit der Bodenwand (4) verbunden ist, wobei die Seitenwand (6) eine Kante umfasst, die eine Installationsdosenöffnung definiert,
wobei die Bodenwand (4) eine Bodenwandöffnung umfasst, und die Seitenwand (6) eine Seitenwandöffnung umfasst, wobei die Seitenwandöffnung und die Bodenwandöffnung zueinander in Verbindung stehen.

10. Auslassteil (40; 50), das in einer Kombination aus einer Installationsdose (2) und einem Auslassteil (40; 50) gemäß einem der Ansprüche 1-9 verwendet werden soll, wobei das Auslassteil (40; 50) umfasst:
einen Bodenwandabschnitt (46; 56), der mit einer Bodenwandöffnung der Installationsdose (2) übereinstimmt; und
einen Seitenwandabschnitt (44; 54), der mindestens einen Auslass (42; 52) hat, der sich unter rechten Winkeln in Bezug auf den Seitenwandabschnitt (44; 54) von einer Auslassöffnung in dem Seitenwandabschnitt (44; 54) erstreckt,
wobei der Seitenwandabschnitt (44; 54) mit einer Seitenwandöffnung der Installationsdose (2) übereinstimmt.

## Revendications

1. Combinaison d'un boîtier d'installation (2) et d'une partie tuyère (40 ; 50), ledit boîtier d'installation (2) comprenant :
une paroi inférieure (4) ; et
une paroi latérale (6) reliée à ladite paroi inférieure (4), ladite paroi latérale (6) comprenant un bord qui définit une ouverture de boîtier d'installation,
dans laquelle ladite paroi inférieure (4) comprend une ouverture de paroi inférieure, et ladite paroi latérale (6) comprend une ouverture de paroi latérale, ladite ouverture de paroi latérale et ladite ouverture de paroi inférieure étant reliées l'une à l'autre,
ladite partie tuyère (40 ; 50) comprenant :
une section de paroi inférieure (46 ; 56) qui se conforme à l'ouverture de paroi inférieure dudit boîtier d'installation (2) ; et
une section de paroi latérale (44 ; 54) ayant au moins une tuyère (42 ; 52) qui s'étend perpendiculaire à ladite section de paroi latérale (44 ; 54) depuis une ouverture de tuyère située dans ladite section de paroi latérale (44 ; 54), ladite section de paroi latérale (44 ; 54) se conformant à ladite ouverture de paroi latérale dudit boîtier d'installation (2),
dans laquelle ledit boîtier d'installation (2) et ladite partie tuyère (40 ; 50) sont adaptés pour que ladite partie tuyère (40 ; 50) adopte au moins une première position ou une seconde position par rapport audit boîtier d'installation, dans laquelle
dans ladite première position de ladite partie tuyère (40 ; 50), ladite ouverture de tuyère se trouve au-dessus de ladite paroi inférieure (4) dudit boîtier d'installation (2),
**caractérisée en ce que**, dans ladite seconde position de ladite partie tuyère (40 ; 50), ladite ouverture de tuyère se trouve au moins partiellement sous ladite paroi inférieure dudit boîtier d'installation.

2. Combinaison d'un boîtier d'installation (2) et d'une partie tuyère (40 ; 50) selon la revendication 1, dans laquelle
dans ladite première position de ladite partie tuyère (40 ; 50), ladite section de paroi inférieure (46 ; 56) de ladite partie tuyère (40 ; 50) est parallèle à ladite paroi inférieure (4) dudit boîtier d'installation (2) et ferme ladite ouverture de paroi inférieure de celui-ci, et ladite section de paroi latérale (44 ; 54) de ladite partie tuyère (40 ; 50) est parallèle à ladite paroi latérale (6) dudit boîtier d'installation (2) et ferme ladite ouverture de paroi latérale de celui-ci ; et
dans ladite seconde position de ladite partie tuyère (40 ; 50), ladite section de paroi inférieure (46 ; 56) de ladite partie tuyère (40 ; 50) se trouve au moins partiellement sous ladite paroi inférieure (4) dudit boîtier d'installation (2) au niveau de ladite ouverture de paroi inférieure de celui-ci, et ladite section de paroi latérale (44 ; 54) de ladite partie tuyère (40 ; 50) est parallèle à ladite paroi latérale (6) dudit boîtier d'installation et ferme ladite ouverture de paroi latérale de celui-ci.

3. Combinaison d'un boîtier d'installation (2) et d'une partie tuyère (40 ; 50) selon la revendication 1 ou 2, dans laquelle, dans ladite seconde position de ladite partie tuyère (40 ; 50), ladite section de paroi inférieure (46 ; 56) de celle-ci s'étend à un angle supérieure à zéro depuis ladite paroi inférieure (4) dudit boîtier d'installation (2).

4. Combinaison d'un boîtier d'installation (2) et d'une partie tuyère (40 ; 50) selon l'une quelconque des revendications précédentes, dans laquelle ladite ouverture de paroi inférieure de boîtier d'installation, au niveau d'au moins une partie de son bord, est munie d'un volet (37, 39) qui, dans ladite seconde position de ladite partie tuyère (40 ; 50), s'étend à ladite section de paroi inférieure (46 ; 56) de ladite partie tuyère (40 ; 50), ou devient contigu à ladite section de paroi inférieure (46 ; 56) de ladite partie tuyère (40 ; 50).

5. Combinaison d'un boîtier d'installation (2) et d'une partie tuyère (40 ; 50) selon la revendication 4, dans laquelle ledit volet (37, 39) est relié de manière défléchissante, et en particulier à l'aide de charnière, à ladite paroi inférieure de boîtier d'installation (4).

6. Combinaison d'un boîtier d'installation (2) et d'une partie tuyère (40 ; 50) selon l'une quelconque des revendications 1 à 3, dans laquelle ladite section de paroi inférieure et/ou ladite section de paroi latérale (54) de ladite partie tuyère (50) est/sont munie(s) d'un volet (57) qui, dans ladite seconde position de ladite partie tuyère (50), s'étend à ladite paroi inférieure (4) dudit boîtier d'installation (2).

7. Combinaison d'un boîtier d'installation (2) et d'une partie tuyère (40 ; 50) selon la revendication 6, dans laquelle ledit volet (57) est fermement relié à ladite partie tuyère (50).

8. Combinaison d'un boîtier d'installation (2) et d'une partie tuyère (40 ; 50) selon l'une quelconque des revendications précédentes, dans laquelle ladite paroi inférieure (4) dudit boîtier d'installation (2) comprend une butée (11) qui se projette vers le haut afin de bloquer ladite section de paroi inférieure de ladite partie tuyère dans sa première ou seconde position par rapport à ladite paroi inférieure (4).

9. Boîtier d'installation (2) destiné à être utilisé dans une combinaison de boîtier d'installation (2) et de partie tuyère (40 ; 50) selon l'une quelconque des revendications précédentes, ledit boîtier d'installation (2) comprenant :
une paroi inférieure (4) ; et
une paroi latérale (6) reliée à ladite paroi inférieure (4), ladite paroi latérale (6) comprenant un bord qui définit une ouverture de boîtier d'installation,
dans lequel ladite paroi inférieure (4) comprend une ouverture de paroi inférieure, et ladite paroi latérale (6) comprend une ouverture de paroi latérale, ladite ouverture de paroi latérale et ladite ouverture de paroi inférieure étant reliées l'une à l'autre.

10. Partie tuyère (40 ; 50) destinée à être utilisée dans une combinaison de boîtier d'installation (2) et de partie tuyère (40 ; 50) selon l'une quelconque des revendications 1 à 9, ladite partie tuyère (40 ; 50) comprenant :
une section de paroi inférieure (46 ; 56) qui se conforme à une ouverture de paroi inférieure dudit boîtier d'installation (2) ; et
une section de paroi latérale (44 ; 54) ayant au moins une tuyère (42 ; 52) qui s'étend à des angles droits par rapport à ladite section de paroi latérale (44 ; 54) depuis une ouverture de tuyère dans ladite section de paroi latérale (44 ; 54),
dans laquelle ladite section de paroi latérale (44 ; 54) se conforme à une ouverture de paroi latérale dudit boîtier d' installation (2).
